# FASCICULE DE BREVET EUROPEEN

(11) **EP 1 468 793 B1**
(45) Date de publication et mention de la délivrance du brevet: **23.11.2005**
(21) Numéro de dépôt: 04291006.7
(22) Date de dépôt: 15.04.2004
(51) Int. Cl.: B26B 3/03

(54) **Dispositif de découpe de légumes en rubans ou en lamelles ainsi que boîtier destiné à un tel dispositif**
Vorrichtung zum Zerschneiden von Gemüse in Bänder oder Streifen sowie ein Behälter für eine solche Vorrichtung
Device for cutting vegetables into ribbons or strips as well as a container for such a device

(30) Priorité: 16.04.2003 FR 0304743
(43) Date de publication de la demande: 20.10.2004
(73) Titulaire: De Buyer, 88340 Le Val d'Ajol (FR)
(72) Inventeur: De Buyer, Hervé, 88340 Le Val D'Ajol (FR)
(74) Mandataire: Livet, Marie-José

(56) Documents cités:
- FR-A- 1 528 906
- FR-A- 1 534 674
- FR-A- 2 825 043

## Description

La présente invention concerne un dispositif de découpe de légumes en rubans ou en lamelles ou coupe légumes en long à usage aussi bien domestique que professionnel et se distinguant des modèles traditionnels dont la longueur de coupe est limitée.

Dans le cadre de l'invention, le mot « légumes » doit être considéré dans un sens très large, et les légumes découpés peuvent non seulement être à proprement parler des légumes de type quelconque (pommes de terre, concombres, courgettes, carottes, ...) mais également des fruits ou autres aliments se prêtant à la coupe en long.

Il existe actuellement sur le marché différents types de coupe légumes manuels qui ont en commun d'être peu pratiques et d'exposer leurs utilisateurs à de sérieux risques de coupure manuelle.

Parallèlement, il existe également de nombreux coupe légumes ou robots électriques ménagers ou destinés à des industries ou à des collectivités présentant un caractère polyvalent.

Il s'agit là cependant en règle générale d'appareils sophistiqués, qui, outre leur coût élevé présentent souvent l'inconvénient d'être d'une utilisation peu commode et en outre d'être difficiles à nettoyer.

Pour remédier à cet inconvénient, il a été proposé, conformément au document FR-2 825 043 un coupe légume manuel, simple, pratique et bon marché, permettant de faire varier sélectivement les caractéristiques de coupe, et en outre n'exposant pas l'utilisateur à des risques de coupures manuelles graves.

Ce dispositif connu, nommé « mandoline » par les spécialistes comporte :
- un châssis muni d'au moins une lame de coupe montée transversalement en regard d'une fente de passage des légumes découpés ainsi que de deux rails latéraux, et
- un boîtier guidé en translation en va et vient le long des rails de guidage et définissant à sa partie interne un volume de réception des légumes à découper.

Ce boîtier est destiné à être saisi manuellement par l'utilisateur pour être déplacé en va et vient le long des rails de guidage, en exerçant constamment une pression sur les légumes contenus dans le volume de réception, de façon à les appliquer contre la ou les lame(s) de coupe montées sur le châssis et permettre une découpe par cette ou ces lame(s).

Ce coupe légume de sécurité présente l'avantage de permettre de réaliser, sans efforts de nombreuses préparations différentes (rondelles lisses ou ondulées, coupe gaufrée, coupe en dés, ...) et a donc été très bien accueilli par les utilisateurs.

Il présente également de nombreux autres avantages liés en particulier à la simplicité du système d'ajustement des lames de coupe qui permet une qualité de coupe parfaite, à son faible encombrement lors du rangement, et en outre à sa facilité d'entretien, notamment au lave-vaisselle.

Ce coupe légumes manuel de sécurité ne permet toutefois pas de réaliser de coupe en long de légumes, c'est-à-dire en rubans ou en lamelles de longueur relativement importante.

Or, les juliennes de légumes de type lasagnes ou tagliatelles sont actuellement très appréciées par les consommateurs, et ceux-ci n'ont pas d'autres alternatives que de les réaliser manuellement.

La présente invention a pour objet de combler cette lacune.

A cet effet elle concerne un dispositif de découpe du type susmentionné caractérisé en ce que le boîtier est constitué d'une part par une chambre guide de forme parallélépipédique ouverte à sa partie supérieure et ayant une longueur essentiellement supérieure à sa largeur, cette chambre guide étant équipée de deux ailettes latérales dont les bords sont rabattus afin de définir deux glissières ayant une section essentiellement en forme de U qui coopèrent avec les rails de guidage, et d'autre part par un poussoir comportant une plaque d'appui formant semelle de géométrie correspondant à la section de la chambre guide et s'emboîtant dans cette chambre pour permettre d'appliquer les légumes à découper contre la ou les lame(s) de coupe montée(s) sur le châssis lors du déplacement du boîtier, ainsi qu'une poignée destinée à être saisie manuellement par l'utilisateur de manière à définir un ensemble solidaire en translation sur le châssis.

Le châssis de ce dispositif de découpe est de préférence similaire à celui décrit dans le document susmentionné FR-2 825 043, et peut notamment comporter des moyens de réglage de la hauteur de coupe, de façon à permettre d'obtenir des juliennes de légumes de type lasagnes, notamment de courgettes ou de carottes de différentes épaisseurs.

Ces moyens de réglage de la hauteur de coupe peuvent en particulier avantageusement être constitués par une rampe mobile en translation parallèlement au plan de coupe.

Il est ainsi possible de maintenir constamment la rampe de réglage de la hauteur de coupe parallèle à elle-même et par suite de régler la hauteur de coupe tout en garantissant que la première extrémité de la rampe venant en regard de la ou des lame(s) de coupe reste à une distance constante et très courte de cette ou de ces lame(s).

Une telle configuration permet d'optimiser la coupe d'une part grâce à la faible distance de passage rampe/lame(s) qui garantit une régularité et une précision optimum, et d'autre part grâce à l'absence de variation de la hauteur lors de la translation des légumes vers la ou les lame(s) de coupe : on évite en effet ainsi tout phénomène d'amincissement en fin de coupe, tel qu'il pourrait être observé si la rampe de réglage de la hauteur de coupe était montée non pas mobile en translation parallèlement au plan de coupe, mais mobile en rotation autour d'un axe solidaire du châssis par sa seconde extrémité opposée à sa première extrémité située en regard de la ou des lame(s) de coupe.

Selon une autre caractéristique préférentielle de l'invention le châssis comporte au moins un couteau de découpe longitudinale amovible équipé d'un ensemble de lames équidistantes dirigées essentiellement perpendiculairement aux lames transversales de façon à permettre de découper les légumes en lamelles ou juliennes de type tagliatelles.

Le châssis peut avantageusement être équipé d'une série de tels couteaux de découpe dont les lames ont un écartement plus ou moins important de façon à obtenir des lamelles plus ou moins larges.

L'invention se rapporte également à un boîtier destiné à un dispositif de découpe de légumes en rubans ou en lamelles du type susmentionné.

Ce boîtier correspond en fait à un accessoire adapté à un coupe légumes manuel de sécurité tel que décrit dans le document FR-2 825 043.

Selon l'invention, un tel boîtier est caractérisé en ce qu'il est constitué d'une part par une chambre guide de forme parallélépipédique ouverte à sa partie supérieure et ayant une longueur essentiellement supérieure à sa largeur, et d'autre part par un poussoir comportant une plaque d'appui formant semelle de géométrie correspondant à la section de la chambre guide et s'emboîtant dans cette chambre pour permettre d'appliquer les légumes à découper contre la ou les lame(s) de coupe montée(s) sur le châssis du coupe légumes manuel de sécurité lors du déplacement du boîtier, ainsi qu'une poignée destinée à être saisie manuellement par l'utilisateur de manière à définir un ensemble solidaire en translation sur le châssis.

Il est essentiel que la chambre guide soit suffisamment étroite pour exclure tout pivotement des légumes à découper au cours de cette translation.

Selon l'invention, la chambre guide est équipée de deux ailettes latérales dont les bords sont rabattus afin de définir deux glissières ayant une section essentiellement en forme de U destinées à coopérer avec les rails de guidage du châssis.

La présence de ces glissières correspond à une caractéristique particulièrement avantageuse de l'invention vu qu'elle permet de solidariser le boîtier et le châssis lors du processus de découpe, et ainsi de garantir la sécurité de l'utilisateur en excluant toute séparation intempestive de ces éléments.

Selon l'invention, le boîtier peut être réalisé en matière plastique, en métal ou encore être bimatériau métal/plastique de façon à faciliter sa fabrication et également son nettoyage en particulier au lave-vaisselle.

La chambre guide a de préférence une longueur d'environ 15 à 25 cm, ce qui permet d'obtenir des juliennes de légumes de grande longueur.

Selon une autre caractéristique de l'invention, la poignée est constituée par un élément en forme de U inversé essentiellement centré dans le plan perpendiculaire à la plaque d'appui formant semelle passant par l'axe longitudinal médian de cette plaque.

Selon l'invention cet élément comporte d'une part deux branches latérales essentiellement perpendiculaires à la plaque d'appui formant semelle et dont les extrémités sont respectivement fixées à cette plaque au niveau de ses bords opposés intersectés par l'axe longitudinal médian et d'autre part une branche centrale ou branche de préhension ayant une forme ergonomique.

Selon l'invention, la branche de préhension de la poignée peut avantageusement présenter des évidements ayant pour fonction de l'alléger.

Les branches latérales de la poignée peuvent quant à elles le cas échéant être équipées de plaquettes de rigidification.

Selon une autre caractéristique de l'invention la plaque d'appui formant semelle est équipée sur sa face inférieure opposée à la poignée d'une série de picots uniformément répartis sur sa surface et ayant pour fonction de venir se planter dans la chair des légumes à découper pour assurer leur maintien.

Les caractéristiques du dispositif de découpe et du boîtier qui font l'objet de l'invention seront décrites plus en détail en se référant aux dessins non limitatifs annexés dans lesquels :
- la figure 1 est une vue en perspective éclatée du boîtier ;
- la figure 2 est une vue en perspective représentant la face inférieure du boîtier ;
- la figure 3 est une vue en perspective d'une variante de poussoir ;
- la figure 4 est une vue en perspective représentant la face inférieure du poussoir représenté sur la figure 3 ;
- la figure 5 est une vue en perspective d'une seconde variante de poussoir.

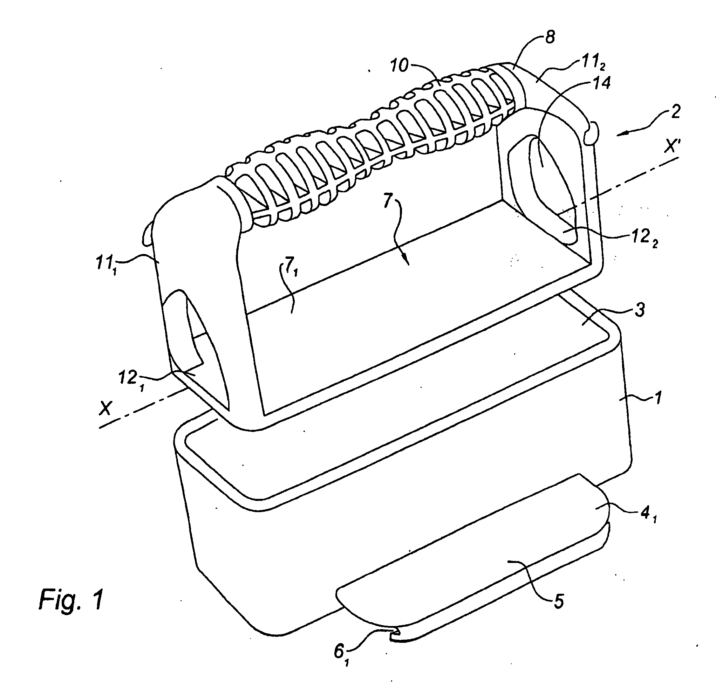

Le boîtier représenté sur les figures 1 à 5 est destiné à coopérer avec un châssis tel que décrit dans le document FR-2 825 043.

Dans un but de brièveté, un tel châssis n'a pas été représenté sur les figures.

Selon la figure 1, le boîtier est constitué par l'association d'une chambre guide 1 et d'un poussoir 2.

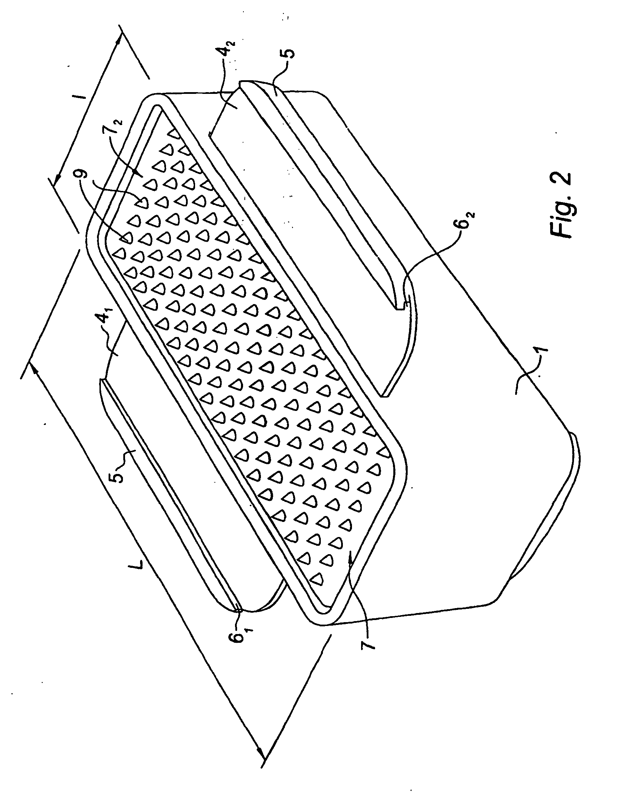

Selon les figures 1 et 2 la chambre guide 1 est réalisée en matière plastique et est constituée par un élément essentiellement rectangulaire ouvert à sa partie supérieure et à sa partie inférieure et définissant à sa partie interne un volume de réception 3 des légumes à découper.

Selon la figure 2, la longueur L de la chambre guide 1 qui est de l'ordre de 15 à 20 cm est essentiellement supérieure à sa largeur ℓ de façon à exclure tout pivotement des légumes à découper après leur mise en place dans le volume de réception 3.

La chambre guide 1 est en outre équipée de deux ailettes latérales 4₁, 4₂ dont les bords 5 sont rabattus de manière à définir deux glissières 6₁, 6₂ ayant une section essentiellement en forme de U.

Ces glissières 6₁, 6₂ sont destinées à coopérer avec des rails latéraux équipant le châssis du dispositif de découpe.

Selon la figure 1, le poussoir 2 est essentiellement constitué par une plaque d'appui formant semelle de forme rectangulaire 7 dont la géométrie correspond à la section de la chambre guide 1 dans laquelle elle s'emboîte comme représenté sur la figure 2.

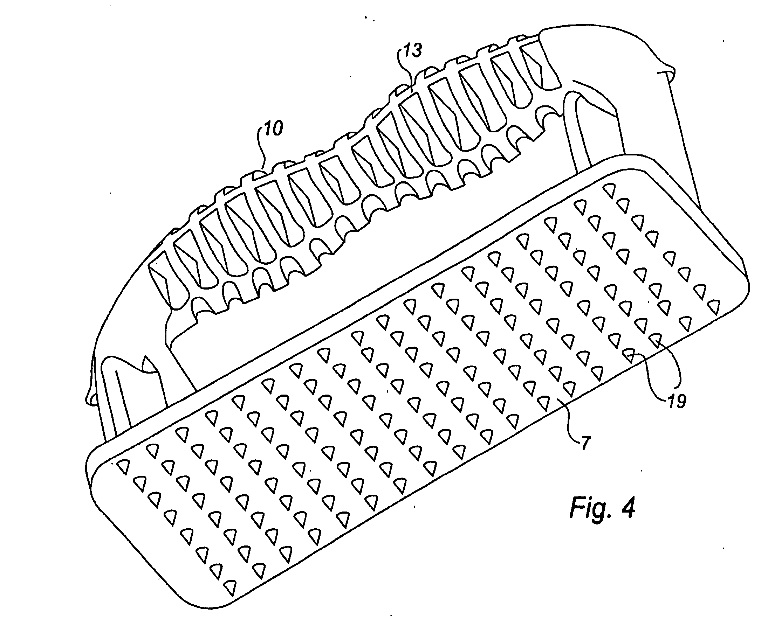

Une première face 7₁ ou face supérieure de la plaque 7 est équipée d'une poignée 8 tandis que la seconde face 7₂ ou face inférieure de cette plaque 7 est équipée d'une série de picots 9 uniformément répartis sur sa surface qui sont représentés sur les figures 2 et 4.

Selon la figure 1, la poignée 8 est constituée par un élément réalisé en matière plastique en forme de U inversé essentiellement centré dans le plan perpendiculaire à la plaque d'appui formant semelle 7 passant par l'axe longitudinal médian X-X' de cette plaque.

Cet élément 8 comporte une branche centrale 10 ou branche de préhension de forme ergonomique ainsi que deux branches latérales 11₁, 11₂ essentiellement perpendiculaires à la branche centrale 10 et situées de part et d'autre de celle-ci.

Les extrémités des branches latérales 11₁, 11₂ sont fixées à la plaque d'appui formant semelle 7 au niveau de ses bords opposés 12₁, 12₂ intersectés par l'axe longitudinal médian X-X'.

Selon les figures 1, 3 et 4, la branche de préhension 10 de la poignée 8 comporte des évidements 13 disposés parallèlement ayant pour fonction d'alléger celle-ci.

Selon l'exemple de configuration représenté sur la figure 1, les branches latérales 11₁, 11₂ de la poignée 8 sont constituées par des plaquettes s'étendant sur la totalité de la largeur de la plaque d'appui formant semelle 7 et munies d'évidements 14 à leur partie médiane.

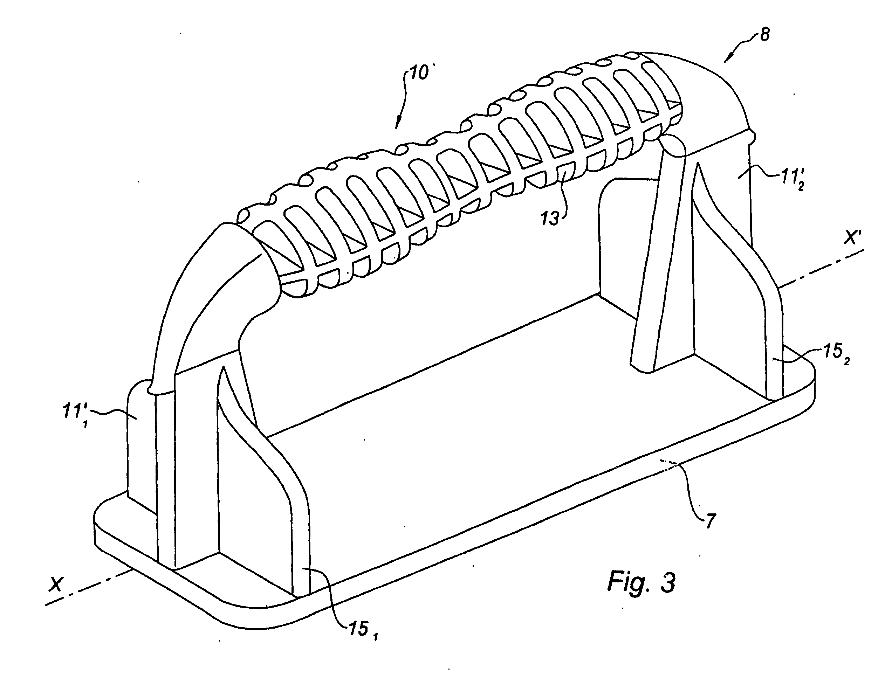

Selon la variante représentée sur les figures 3 et 4, les branches latérales 11'₁, 11'₂ de la poignée 8 s'étendent essentiellement dans le plan perpendiculaire à la plaque d'appui formant semelle 7 passant par l'axe longitudinal médian X-X' de cette plaque et coopèrent avec des plaquettes de rigidification latérales 15₁, 15₂ situées de part et d'autre de celles-ci.

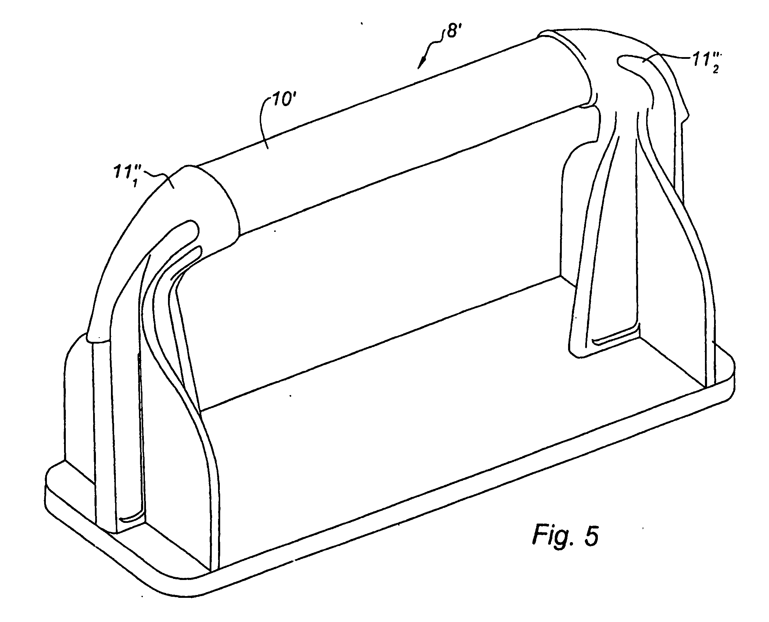

Selon la seconde variante représentée sur la figure 5 la poignée 8' est bimatériau et constituée par l'association d'une branche de préhension 10' réalisée en métal et de branches latérales 11"₁, 11"₂ réalisées en matière plastique.

Il est à noter que la poignée, voire même l'ensemble chambre guide/poussoir pourraient être entièrement métalliques sans pour cela sortir du cadre de l'invention.

Après que le boîtier ait été mis en place sur les rails de guidage équipant le châssis, l'utilisateur peut insérer des légumes à découper en rubans ou en lamelles dans le volume de réception 3 de la chambre guide 1.

Pour découper ces légumes il doit ensuite introduire la plaque d'appui formant semelle 7 dans le volume de réception 3 au-dessus des légumes contenus dans ce volume puis saisir la poignée 8 et déplacer le boîtier en translation en va et vient le long des rails de guidage du châssis, tout en exerçant constamment une pression sur les légumes à découper de façon à les appliquer contre la ou les lame(s) de coupe montée(s) sur le châssis et permettre leur découpe en rubans ou en lamelles.

## Revendications

1. Dispositif de découpe de légumes en rubans ou en lamelles comportant :
- un châssis muni d'au moins une lame de coupe montée transversalement en regard d'une fente de passage des légumes découpés ainsi que de deux rails latéraux, et
- un boîtier guidé en translation en va et vient le long des rails de guidage et définissant à sa partie interne un volume de réception des légumes à découper, ce boîtier étant destiné à être saisi manuellement par l'utilisateur pour être déplacé en va et vient le long des rails de guidage, en exerçant constamment une pression sur les légumes contenus dans le volume de réception de façon à les appliquer contre la ou les lame(s) de coupe montées sur le châssis et permettre une découpe par cette ou ces lame(s),
**caractérisé en ce que**
le boîtier est constitué d'une part par une chambre guide (1) de forme parallélépipédique ouverte à sa partie supérieure et ayant une longueur (L) essentiellement supérieure à sa largeur (ℓ), cette chambre guide (1) étant équipée de deux ailettes latérales (4₁, 4₂) dont les bords (5) sont rabattus afin de définir deux glissières (6₁, 6₂) ayant une section en forme de U qui coopèrent avec les rails de guidage, et d'autre part par un poussoir (2) comportant une plaque d'appui formant semelle (7) de géométrie correspondant à la section de la chambre guide (1) et s'emboîtant dans cette chambre (1) pour permettre d'appliquer les légumes à découper contre la ou les lame(s) de coupe montées sur le châssis lors du déplacement du boîtier, ainsi qu'une poignée (8) destinée à être saisie manuellement par l'utilisateur de manière à définir un ensemble solidaire en translation sur le châssis.

2. Dispositif selon la revendication 1,
**caractérisé en ce qu'**
il comporte des moyens de réglage de la hauteur de coupe.

3. Dispositif selon l'une quelconque des revendications 1 et 2,
**caractérisé en ce qu'**
il comporte au moins un couteau de découpe longitudinale amovible équipé d'un ensemble de lames équidistantes dirigées essentiellement perpendiculairement à la ou aux lames transversales de façon à permettre de découper les légumes en lamelles.

4. Boîtier destiné à un dispositif de découpe de légumes en rubans ou en lamelles selon l'une quelconque des revendications 1 à 3,
**caractérisé en ce qu'**
il est constitué d'une part par une chambre guide (1) de forme parallélépipédique ouverte à sa partie supérieure et ayant une longueur (L) essentiellement supérieure à sa largeur (ℓ), cette chambre guide (1) étant équipée de deux ailettes latérales (4₁, 4₂) dont les bords (5) sont rabattus afin de définir deux glissières (6₁, 6₂) ayant une section essentiellement en forme de U et d'autre part par un poussoir (2) comportant une plaque d'appui formant semelle (7) de géométrie correspondant à la section de la chambre guide (1) et s'emboîtant dans cette chambre (1), ainsi qu'une poignée (8) destinée à être saisie manuellement par l'utilisateur.

5. Boîtier selon l'une quelconque des revendications 1 à 4,
**caractérisé en ce que**
la chambre guide (1) a une longueur (L) d'environ 15 à 20 cm.

6. Boîtier selon l'une quelconque des revendications 1 à 5,
**caractérisé en ce que**
la poignée (8) est constituée par un élément en forme de U inversé essentiellement centré dans le plan perpendiculaire à la plaque d'appui formant semelle (7) passant par l'axe longitudinal médian (X-X') de cette plaque (7) et comportant d'une part deux branches latérales (11₁, 11₂) essentiellement perpendiculaires à la plaque d'appui formant semelle (7) et dont les extrémités sont respectivement fixées à cette plaque, au niveau de ses bords opposés (12₁, 12₂) intersectés par l'axe longitudinal médian (X-X') et d'autre part par une branche centrale (10), ou branche de préhension ayant une forme ergonomique.

7. Boîtier selon la revendication 6,
**caractérisé en ce que**
la branche centrale (10) de la poignée (8) comporte des évidements (14).

8. Boîtier selon l'une quelconque des revendications 6 et 7,
**caractérisé en ce que**
les branches latérales (11₁, 11₂) de la poignée (8) sont équipées de plaquettes de rigidification (15₁, 15₂).

9. Boîtier selon l'une quelconque des revendications 1 à 8,
**caractérisé en ce que**
la plaque d'appui formant semelle (7) est équipée sur sa face inférieure opposée à la poignée d'une série de picots (9) uniformément répartis sur sa surface.

## Patentansprüche

1. Vorrichtung zum Zerschneiden von Gemüse in Bänder oder Streifen, bestehend aus
- einem Gestell, das mit zumindest einem quer zu einem Durchtrittsspalt für das zerschnittene Gemüse angeordnenten Schneidmesser sowie mit zwei seitlichen Schienen versehen ist, und
- einem Behälter, der für eine hin- und hergehende Translationsbewegung entlang von Führungsschienen geführt ist und in seinem inneren Bereich einen Aufnahmeraum für das zu zerschneidende Gemüse bildet, wobei dieser Behälter dazu bestimmt ist, vom Benutzer von Hand erfaßt zu werden, um hin- und hergehend entlang den Führungsschienen unter ständiger Ausübung eines Druckes auf das im Aufnahmeraum enthaltene Gemüse verschoben zu werden, derart, daß dieses gegen das oder die im Gestell angebrachte(n) Schneidmesser angedrückt wird und ein Zerschneiden durch das oder die Messer ermöglicht ist,
**dadurch gekennzeichnet, daß**
der Behälter einerseits von einer Führungskammer (1) von parallelepipedischer Form, die in ihrem oberen Bereich offen ist und eine wesentlich größere Länge (L) als ihre Breite (I) aufweist, gebildet ist, wobei die Führungskammer (1) mit zwei seitlichen Flügeln (4₁, 4₂) versehen ist, deren Ränder (5) zur Bildung zweier Gleitbahnen (6₁, 6₂) mit einem U-förmigen Querschnitt umgelegt sind, die mit den Führungsschienen zusammenwirken, und andererseits von einer Druckvorrichtung (2) gebildet ist, die eine einen Druckboden bildende Stützplatte (7) umfaßt, deren Geometrie dem Querschnitt der Führungskammer (1) entspricht und sich in diese Kammer (1) einfügt zur Ermöglichung eines Andrückens des zu zerschneidenden Gemüses gegen das oder die Schneidmesser am Gestell bei der Verschiebung des Behälters, sowie mit einem Handgriff (8) versehen ist, der dazu bestimmt ist, vom Benutzer zur Bildung einer festen Einheit in der Translationsbewegung auf dem Gestell erfaßt zu werden.

2. Vorrichtung nach Anspruch 1, **dadurch gekennzeichnet, daß** sie Mittel zur Regulierung der Schnitthöhe umfaßt.

3. Vorrichtung nach einem der Ansprüche 1 und 2, **dadurch gekennzeichnet, daß** sie zumindest ein abnehmbares Längsschneidmesser umfaßt, das mit einer Einheit gleich beabstandeter Messer versehen ist, die im wesentlichen senkrecht zu dem oder den Quermesser(n) zur Ermöglichung eines Zerschneidens des Gemüses in Streifen ausgerichtet sind.

4. Behälter für eine Vorrichtung zum Zerschneiden von Gemüse in Bänder oder Streifen nach einem der Ansprüche 1 bis 3,
**dadurch gekennzeichnet, daß**
er einerseits von einer Führungskammer (1) von parallelepipedischer Form, die in ihrem oberen Bereich offen ist, und eine wesentlich größere Lange (L) als ihre Breite (I) aufweist, gebildet ist, wobei die Führungskammer (1) mit zwei seitlichen Flügeln (4₁, 4₂) versehen ist, deren Ränder (5) zur Bildung zweier Gleitbahnen (6₁, 6₂) mit einem im wesentlichen U-förmigen Querschnitt umgelegt sind, und andererseits von einer Druckvorrichtung (2) gebildet ist, die eine einen Druckboden bildende Stützplatte (7) umfaßt, deren Geometrie dem Querschnitt der Führungskammer (1) entspricht und sich in diese Kammer (1) einfügt, sowie mit einem Handgriff (8) versehen ist, der dazu bestimmt ist, vom Benutzer von Hand erfaßt zu werden.

5. Behälter nach einem der Ansprüche 1 bis 4, **dadurch gekennzeichnet, daß** die Führungskammer (1) eine Länge (L) von etwa 15 bis 20 cm aufweist.

6. Behälter nach einem der Ansprüche 1 bis 5, **dadurch gekennzeichnet, daß** der Handgriff (8) von einem Element in Form eines umgekehrten U gebildet ist, das im wesentlichen in der zu der einen Druckboden bildenden Stützplatte (7) durch die Längsmittelachse (X-X') der Platte (7) verlaufenden senkrechten Ebene zentriert ist und einerseits zwei seitliche Arme (11₁, 11₂) im wesentlichen senkrecht zu der einen Druckboden bildenden Stützplatte (7), deren Enden jeweils an dieser Platte in Höhe ihrer von der Längsmittelachse (X-X') geschnittenen gegenüberliegenden Ränder (12₁, 12₂) befestigt sind, und andererseits einen mittleren Arm (10) bzw. Haltearm von ergonomischer Form umfaßt.

7. Behälter nach Anspruch 6, **dadurch gekennzeichnet, daß** der mittlere Arm (10) des Handgriffs (8) Aussparungen (14) aufweist.

8. Behälter nach einem der Ansprüche 6 und 7, **dadurch gekennzeichnet, daß** die seitlichen Arme (11₁, 11₂) des Handgriffs (8) mit Versteifungsstegen (15₁, 15₂) versehen sind.

9. Behälter nach einem der Ansprüche 1 bis 8, **dadurch gekennzeichnet, daß** die den Druckboden bildende Stützplatte (7) auf ihrer dem Handgriff gegenüberliegenden Unterseite mit einer Anzahl gleichmäßig auf ihrer Oberfläche verteilter Zacken versehen ist.

## Claims

1. Device for cutting up vegetables into strips or slices comprising:
- a frame which is provided with at least one cutting blade which is mounted transversely opposite an aperture for the passage of the cut vegetables and two lateral rails, and
- a housing which is guided in translation back and forth along the guiding rails and which defines, at the internal portion thereof, a space for receiving the vegetables to be cut up, the housing being intended to be held manually by the user in order to be displaced back and forth along the guiding rails, with a pressure being applied constantly to the vegetables contained in the receiving space so as to press them against the cutting blade(s) which is/are mounted on the frame and to allow cutting by the blade(s),
**characterised in that**
the housing is constituted, at one side, by a guide chamber (1) of parallelepipedal form which is open at the upper portion thereof and which has a length (L) which is substantially greater than the width (I) thereof, the guide chamber (1) being provided with two lateral fins (4₁,4₂) whose edges (5) are bent over in order to define two slides (6₁, 6₂) which are U-shaped in cross-section and which cooperate with the guiding rails, and, at the other side, by a pushing member (2) comprising a supporting plate which forms a base (7) having geometry corresponding to the cross-section of the guide chamber (1) and which fits **in that** chamber (1) in order to allow the vegetables which are to be cut up to be pressed against the cutting blade(s) which is/are mounted on the frame when the housing is displaced, and a handle (8) which is intended to be held manually by the user so as to define an integral assembly in terms of translation on the frame.

2. Device according to claim 1,
**characterised in that**
it comprises means for adjusting the cutting height.

3. Device according to either claim 1 or claim 2,
**characterised in that**
it comprises at least one detachable longitudinal cutting knife which is provided with an assembly of equidistant blades which are directed substantially perpendicularly to the transverse blade(s) so as to allow the vegetables to be cut up into slices.

4. Housing intended for a device for cutting up vegetables into strips or slices according to any one of claims 1 to 3,
**characterised in that**
it is constituted, at one side, by a guide chamber (1) of parallelepipedal form which is open at the upper portion thereof and which has a length (L) which is substantially greater than the width (I) thereof, the guide chamber (1) being provided with two lateral fins (4₁,4₂) whose edges (5) are bent over in order to define two slides (6₁,6₂) which are substantially U-shaped in cross-section and, at the other side, by a pushing member (2) comprising a supporting plate which forms a base (7) having geometry corresponding to the cross-section of the guide chamber (1) and which fits **in that** chamber (1), and a handle (8) which is intended to be held manually by the user.

5. Housing according to any one of claims 1 to 4,
**characterised in that**
the guide chamber (1) has a length (L) of approximately from 15 to 20 cm.

6. Housing according to any one of claims 1 to 5,
**characterised in that**
the handle (8) is constituted by an element which is in the form of an inverted U and which is substantially centred in the plane perpendicular to the supporting plate which forms the base (7), extending through the longitudinal centre axis (X-X') of the plate (7) and comprising, at one side, two lateral branches (11₁,11₂) which are substantially perpendicular to the supporting plate which forms a base (7) and whose ends are fixed to that plate, respectively, in the region of the opposite edges (12₁, 12₂) thereof which are intersected by the longitudinal centre axis (X-X') and, at the other side, by a central branch (10), or gripping branch having an ergonomic shape.

7. Housing according to claim 6,
**characterised in that**
the central branch (10) of the handle (8) comprises recesses (14).

8. Housing according to either claim 6 or claim 7,
**characterised in that**
the lateral branches (11₁, 11₂) of the handle (8) are provided with small strengthening plates (15₁,15₂).

9. Housing according to any one of claims 1 to 8,
**characterised in that**
the supporting plate forming the base (7) is provided, at the lower face thereof, opposite the handle, with a series of small spikes (9) which are uniformly distributed over the surface thereof.
